# EUROPEAN PATENT APPLICATION

(11) **EP 4 390 597 A1**
(43) Date of publication of application: **26.06.2024**
(21) Application number: 21959480.1
(22) Date of filing: 01.10.2021
(51) Int. Cl.: G05D 1/02, H04M 11/00

(54) **COMMUNICATION SYSTEM AND ROBOT**

(71) Applicant: Avatarin Inc., Tokyo 103-0022 (JP)
(72) Inventor: FUKABORI, Akira, Tokyo 103-0022 (JP); KAJITANI, Kevin, Tokyo 103-0022 (JP)
(74) Representative: D Young & Co LLP
(86) International application number: PCT/JP2021/036431
(87) International publication number: WO 2023/053446

(57) **Abstract**

A communication system and so forth that is easy to use for both a remote operator of a telepresence robot and an on-site user is provided. The communication system includes a robot that is not fixed, and a computer that is capable of communication with the robot. The robot includes a camera, a driving unit that is capable of remote operation by the computer, a first input unit that is for input of an instruction to the robot, and a callup unit that, when communication connection is not established with the computer, transmits a callup notification directed to the computer in accordance with the instruction input to the first input unit. The computer includes a second input unit that is for input of an instruction to the robot, and a display unit that displays an image captured by the camera and also , in a case of receiving a the callup notification from the robot, displays that the effect that the notification has been received.

## Description

### Technical Field

**The** present invention relates to a communication system and a robot.

### Background Art

In recent years, videoconferencing systems using the Internet have come into widespread use, and telepresence robots, with which users at remote locations not only are able to talk while seeing the faces of the others, but also are able to operate the orientation and position of a camera.

For example, Patent Document 1 below describes a camera-equipped mobile body that includes a camera that provides a captured images to a remote operator, and a mask processing unit that executes mask processing of hiding at least part of the captured image from the remote operator and that switches the mask processing depending on the purpose of use.

### Citation List

### Patent Document

Patent Document 1: Patent Publication JP-A-2019-062308

### Summary

### Technical Problem

With conventional telepresence robots, usage is started with the remote operator who establishes connection of communication with the telepresence robot by using a remote operation terminal, and operation from the remote operator side serves as a beginning point of operation. However, there are cases in which the user side at the location where the telepresence robot is installed (hereinafter, also referred to as on-site user) desires to contact the remote user via the telepresence robot. Nonetheless, for the on-site user there is no way but to wait for contact from the remote operator. As such, currently, the starting of communication between the remote operator and the on-site user is initiated one-sidedly by the remote operator.

Accordingly, the present invention provides technology that enables communication of a higher level of convenience for both the operator of the robot and the on-site user.

### Solution to Problem

A communication system according to an aspect of the present invention includes a robot that is not fixed, and a computer that is capable of communication with the robot. The robot includes a camera, a driving unit capable of remote operation by the computer, a first input unit that is for input of an instruction to the robot, and a callup unit that, when communication connection is not established with the computer, transmits a callup notification directed to the computer in accordance with the instruction that has been input to the first input unit. The computer includes a second input unit that is for input of an instruction to the robot, and a display unit that displays an image captured by the camera and also that, in a case of receiving the callup notification from the robot, displays that the notification has been received.

According to this aspect, by transmitting a callup notification from the robot to the computer in accordance with input to the first input unit by an on-site user, a remote operator of the robot can be prompted to connect to the robot from the computer. Accordingly, a communication system can be realized that is easy to use for both the remote operator and the on-site user.

In the above aspect, in a case in which the information showing that the callup notification has been received is displayed on the display unit, the computer establishes a communication connection with the robot in accordance with input to the second input unit. According to this aspect, the computer can connect to the robot that transmitted the callup notification.

In the above aspect, the robot may further include a storage unit for storing information representing at least one computer that is capable of communication with the robot, and the callup unit may transmit the callup notification to a computer corresponding to information selected, out of the information representing at least one computer, in accordance with input to the first input unit. According to this aspect, the callup notification can be transmitted to the computer selected out of computers of which information is stored in the robot in advance.

In the above aspect, the robot may connect to the Internet in accordance with input to the first input unit, and search for information relating to computers capable of communication connection with the robot, and the callup unit may transmit the callup notification to a computer corresponding to information selected, out of the information that is searched for, in accordance with input to the first input unit. According to this aspect, the callup notification can be transmitted to the computer searched for via the Internet.

In the above aspect, the first input unit may be a speech input unit that accepts input of speech, the robot may further include a speech recognition unit that recognizes speech, which has been input to the first input unit, and performs conversion thereof into text, and in a case in which speech including a particular text is input to the first input unit, the callup unit may transmit the callup notification to the computer that is set in advance, out of the at least one computer. According to this aspect, the callup notification can be transmitted to a computer that is set in advance, in accordance with speech of the user.

**A** robot according to another aspect of the present invention is a robot of a mobile type or of a mounted type, and includes a driving unit that is capable of remote operation by a computer, an input unit that is input of an instruction to the robot, and a callup unit that, when communication connection is not established with the computer, transmits a callup notification directed to the computer in accordance with the input to the input unit.

According to this aspect, by transmitting a callup notification from the robot to the computer in accordance with input to the input unit by the on-site user, the remote operator of the robot can be prompted to connect to the robot from the computer. Accordingly, a communication system can be realized that is easy to use for both the remote operator and the on-site user.

### Advantageous Effects of Invention

According to the present invention, a communication system and a robot can be realized that are easy to use for both the remote operator of the telepresence robot and the on-site user.

### Brief Description of Drawings

Fig. 1 is a diagram illustrating a configuration of a communication system according to an embodiment of the present invention.
Fig. 2 is a diagram illustrating a physical configuration of a computer according to the present embodiment.
Fig. 3 is a diagram illustrating a physical configuration of a robot according to the present embodiment.
Fig. 4 is a flowchart showing processing executed by each of the computer and the robot according to the present embodiment.
Fig. 5 is diagrams illustrating an example of a screen displayed on the robot according to the present embodiment.
Fig. 6 is a diagram illustrating an example of a screen displayed on the computer according to the present embodiment.
Fig. 7 is diagrams illustrating a modification of the screen displayed on the robot according to the present embodiment.

### Description of Embodiments

**An** embodiment of the present invention will be described below with reference to the attached drawings. Note that in the drawings, items denoted by the same signs have the same or similar configurations.

### (Embodiment)

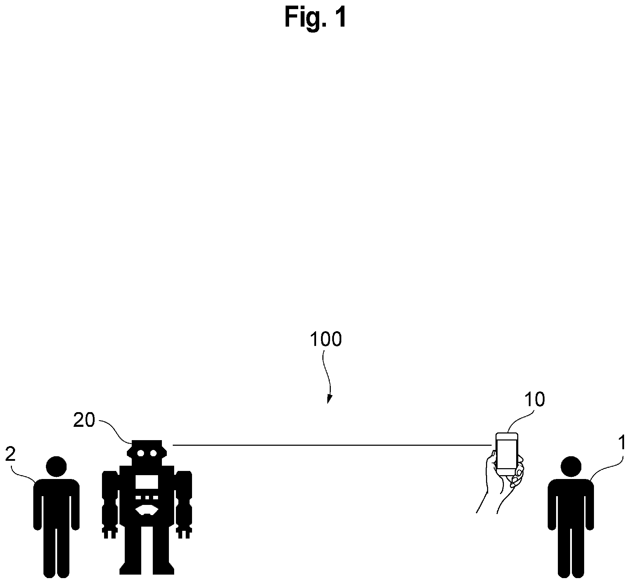

Fig. 1 is a diagram illustrating a configuration of a communication system 100 according to the embodiment of the present invention. The communication system 100 includes a robot 20 that is not fixed, and a computer 10 that is capable of communication with the robot 20. Note that the robot 20 and the computer 10 being capable of communication includes cases of being capable of wireless communication or wired communication, and includes cases of being capable of communication by the Internet or a LAN (Local Area Network), and being capable of Near Field Communication. Note that while one robot 20 and one computer 10 are exemplified in the present embodiment, the numbers thereof are optional. That is to say, one robot 20 may be capable of communication with a plurality of the computers 10, and one computer 10 may be capable of communication with a plurality of the robots 20.

A remote operator 1 remotely operates the robot 20 that is communication-connected to the computer 10 by operating the computer 10. Accordingly, the remote operator 1 can hold a dialogue, via the robot 20, with another user 2 at the location where the robot 20 is installed (hereinafter, also referred to as on-site user), and can cause the robot 20 to perform desired actions.

The robot 20 has a camera, and a driving unit that is remotely operable by a computer that is communication-connected to this robot 20. The robot 20 may be made up of a general-purpose or dedicated telepresence robot or avatar robot, for example, and have a transportation unit such as wheels and so forth.

The robot 20 operates in accordance with commands from the computer 10 to which it is communication-connected. Connection modes between the computer 10 and the robot 20 may include a private mode that requires user authentication and a public mode that does not require user authentication. User authentication in the private mode may be performed by a known technique, and information for user authentication may be registered in advance. Also, the computer 10 that is connected to the robot 20 in public mode is imparted with access authority of a predetermined range.

To say that the robot 20 is not fixed includes a case of the robot 20 being of a mobile type, having a transportation unit such as wheels and so forth, and a case of being of a mounted type that can be mounted on a person, having a driving unit such as manipulators and so forth. A mobile type robot is described in Patent Document 1, for example. Transportation units of mobile type robots include those that travel by one wheel, two wheels, or more wheels, those that travel by caterpillar tracks, those that travel on rails, those that move by hopping, those that perform bipedal ambulation, quadrupedal ambulation, or multipedal ambulation, those that move on or through water by screw propellors, those that fly by airscrew propellers, and so forth. A mounted type robot is disclosed in, for example, MHD Yamen Saraiji, Tomoya Sasaki, Reo Matsumura, Kouta Minamizawa and Masahiko Inami, "Fusion: full body surrogacy for collaborative communication," Proceeding SIGGRAPH '18 ACM SIGGRAPH 2018 Emerging Technologies Article No. 7. Further, the robot 20 includes being a vehicle or heavy equipment that is capable of automated travel or semi-automated travel, or being a drone or an airplane. Also, the robot 20 includes a robot that is installed in a sports stadium or the like and capable of moving along a rail, and includes a camera. Also, the robot 20 includes a satellite type robot that is launched into space, and of which attitude control and control of image-capturing orientation of a camera can be performed.

The computer 10 has an input unit for inputting commands to the robot 20, and a display unit for displaying image captured by the camera of the robot 20. The computer 10 is made up of a smartphone, for example, but may be made up of some other computer (image processing device), such as a personal computer or the like.

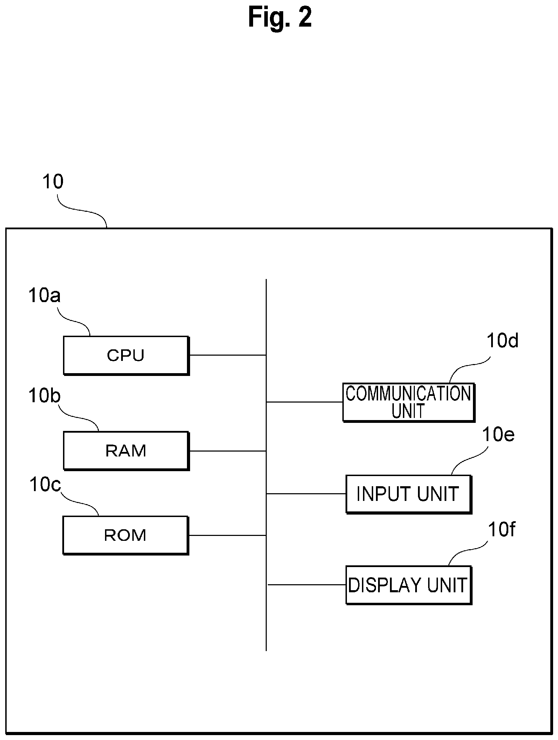

Fig. 2 is a diagram illustrating a physical configuration of the computer 10 according to the present embodiment. The computer 10 has a CPU (Central Processing Unit) 10a that is equivalent to a computing unit, RAM (Random Access Memory) 10b that corresponds to a storage unit, ROM (Read only Memory) 10c that corresponds to a storage unit, a communication unit 10d, an input unit 10e, and a display unit 10f. These configurations are each connected via a bus so as to be capable of exchanging data with each other. Note that while a case in which the computer 10 is made up of one computer is described in the present example, the computer 10 may be realized by a plurality of computers being combined. Also, the configuration illustrated in Fig. 2 is an example, and accordingly the computer 10 may have configurations other than these, and does not have to have part of these configurations.

**The** CPU 10a is a control unit that performs control relating to execution of programs stored in the RAM 10b or the ROM 10c, and computation and processing of data. The CPU 10a is a computing unit that executes a program controlling communication via the robot (communication program). The CPU 10a receives various types of data from the input unit 10e and the communication unit 10d, and displays computation results of the data on the display unit 10f, performs storage thereof in the RAM 10b, and so forth.

The RAM 10b is a part of the storage unit in which data is rewritable, and for example, may be made up of a semiconductor storage device. The RAM 10b may store programs that the CPU 10a executes, and data such as user information and so forth. Note that these are exemplifications, and accordingly data other than these may be stored in the RAM 10b, and part of these does not have to be stored therein.

**The** ROM 10c is a part of the storage unit from which data is readable, and for example, may be made up of a semiconductor storage device. The ROM 10c may store, for example, a communication program, and data that is not rewritten.

The communication unit 10d is an interface for connecting the computer 10 to other equipment. The communication unit 10d may be connected to a communication network such as the Internet or the like.

The input unit 10e accepts input of instructions and information from the user, and may include a keyboard and a touch panel, for example. Also, the input unit 10e may include a microphone for audio input.

The display unit 10f is for visually displaying results of computation by the CPU 10a, and may be made up of an LCD (Liquid Crystal Display), for example. The display unit 10f may display images captured by a camera 20h of the robot 20. The display unit 10f may also display emails, short messages (SMS), text messages, and so forth, that are received by the computer 10.

Additionally, the computer 10 may have an audio output unit that generates a notification sound when emails or messages are received by the computer 10, performing text-to-speech reading of emails and messages that are received, and so forth.

The communication program may be provided in a manner stored in a computer-readable storage medium such as the RAM 10b, the ROM 10c, or the like, and may be provided via a communication network to which connection is made by the communication unit 10d. Various types of actions for controlling the robot 20 are realized in the computer 10 by the CPU 10a executing the communication program. Note that these physical configurations are exemplary, and do not necessarily have to be independent configurations. For example, the computer 10 may include an LSI (Large-Scale Integration) in which the CPU 10a, the RAM 10b, and the ROM 10c are integrated.

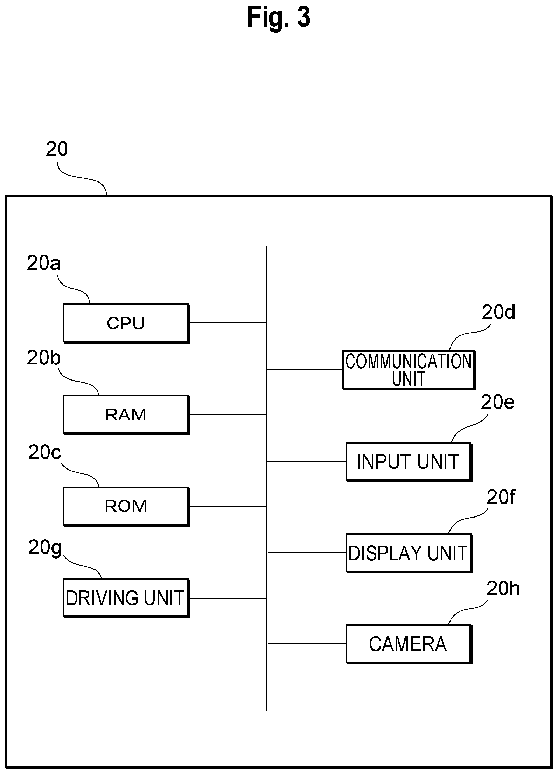

Fig. 3 is a diagram illustrating a physical configuration of the robot 20 according to the present embodiment. The robot 20 has a CPU 20a that is equivalent to a computing unit, RAM 20b that is equivalent to a storage unit, ROM 20c that is equivalent to a storage unit, a communication unit 20d, an input unit 20e, a display unit 20f, a driving unit 20g, and the camera 20h. These configurations are each connected via a bus so as to be capable of exchanging data with each other. Note that the configuration illustrated in Fig. 3 is an example, and accordingly the robot 20 may have configurations other than these, and does not have to have part of these configurations.

The CPU 20a is a control unit that performs control relating to execution of programs stored in the RAM 20b or the ROM 20c, and computation and processing of data. The CPU 20a is a computing unit that executes a program controlling communication via the robot (communication program). The CPU 20a receives various types of data from the input unit 20e and the communication unit 20d, and displays computation results of the data on the display unit 20f, stores thereof in the RAM 20b, and so forth. Also, the CPU 20a controls the driving unit 20g, and controls actions of the robot 20.

The CPU 20a may also function as callup unit to transmit a callup notification to the computer 10 in accordance with input at the input unit 20e, when no communication connection is established between the robot 20 and the computer 10.

The RAM 20b is a part of the storage unit in which data is rewritable, and for example, may be made up of a semiconductor storage device. The RAM 20b may store programs that the CPU 20a executes. Note that these are exemplifications, and accordingly data other than these may be stored in the RAM 20b, and part of these does not have to be stored.

The ROM 20c is a part of the storage unit from which data is readable, and for example, may be made up of a semiconductor storage device. The ROM 20c may store, for example, a communication program, and data that is not rewritten.

The communication unit 20d is an interface for connecting the robot 20 to other equipment. The communication unit 20d may be connected to a communication network such as the Internet or the like.

The input unit 20e accepts input of instructions and information from the user, and may include a touch panel, for example. Also, the input unit 20e may include a microphone for audio input.

The display unit 20f is for visually displaying results of computation by the CPU 20a, and may be made up of an LCD, for example. In a case in which the computer 10 is equipped with a camera, the display unit 20f may display images captured by the camera of the computer 10.

The driving unit 20g includes actuators that are remotely operable, and includes a transportation unit such as wheels and so forth, manipulators, and so forth. In a case in which the robot 20 is a mobile type robot, the driving unit 20g includes at least a transportation unit such as wheels and so forth, and may include manipulators. In a case in which the robot 20 is a mounted type, the driving unit 20g includes at least manipulators.

The camera 20h includes an image-capturing device for performing image capturing of still images or moving images, and transmits the still images or moving images that are image-captured to the computer 10 via the communication unit 20d.

The communication program may be provided in a manner stored in a computer-readable storage medium such as the RAM 20b, the ROM 20c, or the like, and may be provided via a communication network to which connection is made by the communication unit 20d. Various types of actions for controlling the robot 20 are realized in the robot 20 by the CPU 20a executing the communication program. Note that these physical configurations are exemplary, and do not necessarily have to be independent configurations. For example, the robot 20 may include an LSI in which the CPU 20a, the RAM 20b, and the ROM 20c are integrated.

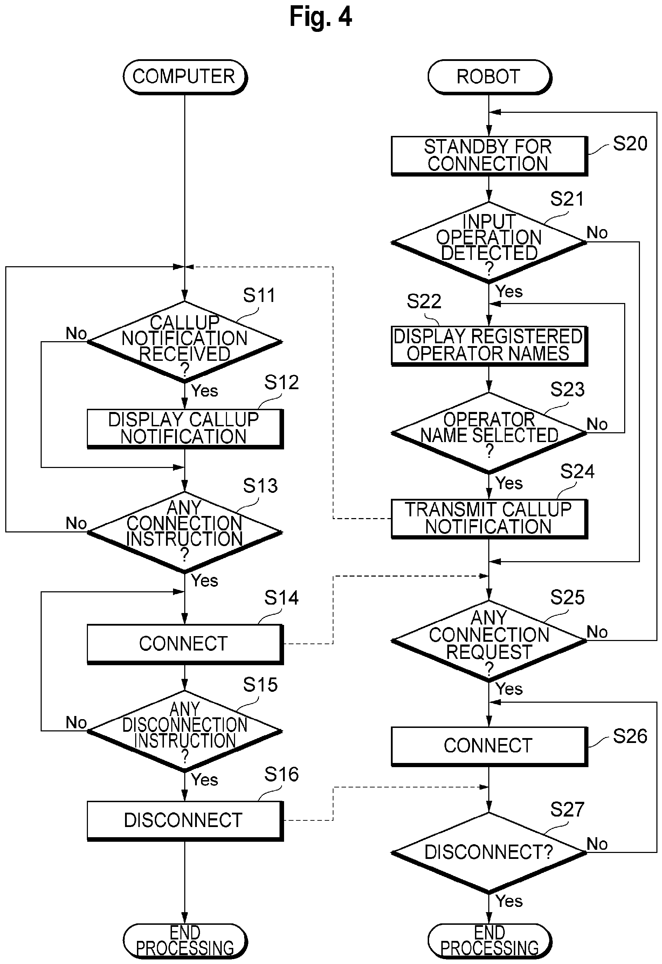

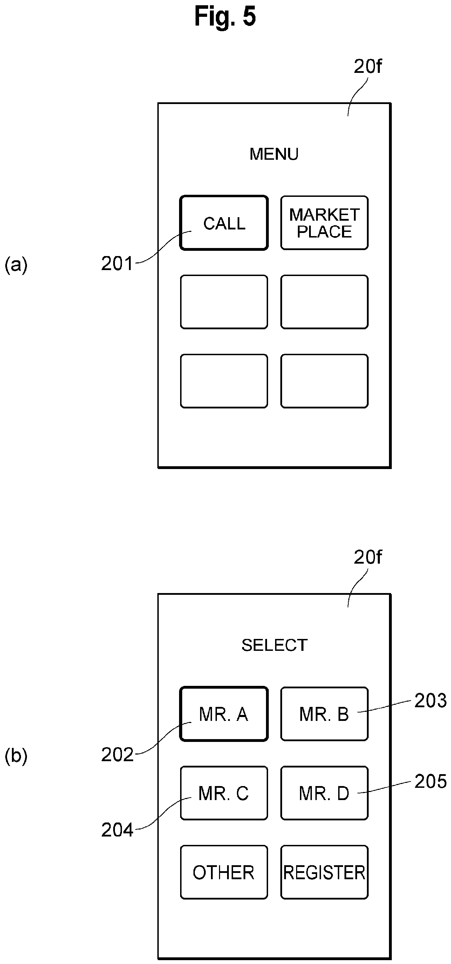

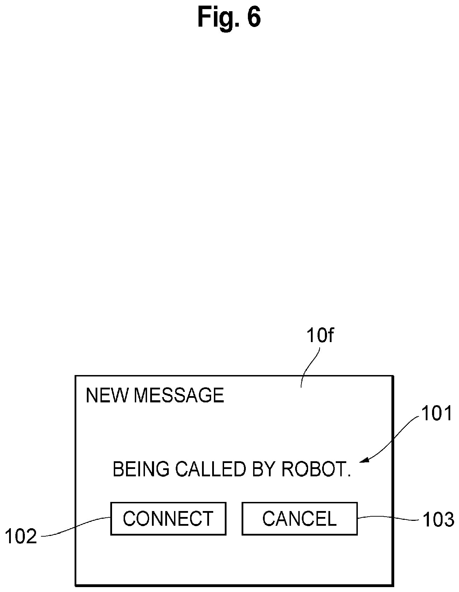

Fig. 4 is a flowchart showing processing executed at each of the computer 10 and the robot 20 according to the present embodiment. Fig. 5 is diagrams illustrating examples of screens displayed on the robot 20 according to the present embodiment. Fig. 6 is a diagram illustrating an example of a screen displayed on the computer 10 according to the present embodiment.

While communication connection with the computer 10 is not established, the robot 20 stands by for connection from the computer 10 (S20).

Upon detecting an input operation to the input unit 20e (S21: Yes), the robot 20 displays an operator name, which is registered in advance, on the display unit 20f (S22). Now, the operator name that is registered in advance is information in which authentication information is stored in the robot 20 in advance, and is information representing a computer that is capable of communication (e.g., communication for calls such as voice calls, video calls, and so forth) with this robot 20 (e.g., user, owner, etc., of the computer). The robot 20 may hold such information in a form such as an address book, for example.

For example, the robot 20 displays a menu screen exemplified in (a) in Fig. 5, in accordance with a tap operation on the input unit 20e. Upon detecting a tap operation on a call button 201 on the menu screen, the robot 20 then displays a selection screen that is exemplified in (b) in Fig. 5. Icons 202 to 205 in which operator names, registered in advance, are displayed, are displayed in the selection screen.

Next, upon detecting that any of the operators has been selected (S23: Yes), the robot 20 transmits a callup notification to the computer 10 of the operator that has been selected (S24). Upon detecting a tap operation on the icon 202 in which "Mr. A" is displayed, out of the icons 202 to 205 illustrated in (b) in Fig. 5, for example, the robot 20 transmits a callup notification by email or message to a computer of Mr. A.

Upon receiving the callup notification from the robot 20 (S11: Yes), the computer 10 displays the received callup notification on the display unit 10f (S12). A notification screen exemplified in Fig. 6 displays a text message 101 to the effect of being called by the robot 20. Alternatively, the computer 10 may generate a ringtone indicating that the callup notification has been received, or may perform text-to-speech reading of the text message 101. Also, the computer 10 may display a connect button 102 including a link for connecting to the robot 20 placing the call, or a cancel button 103 for declining the connection, on the notification screen.

Upon detecting instruction to connect to the robot 20 on the input unit 10e (S13: Yes), the computer 10 executes processing of connecting to the robot 20 (S14). For example, upon detecting a tap operation on the connect button 102 illustrated in Fig. 6, the computer 10 performs connection processing (e.g., communication connection for a call with the robot 20). The connection processing may include login authentication processing or the like. Note that even in a case of not receiving the callup notification (S11: No), the computer 10 can connect to the robot 20 at any time by detecting an instruction for connection on the input unit 10e.

Upon receiving a connection request from the computer 10 (S25: Yes), the robot 20 executes authentication processing and so forth as needed, and connects to the computer 10 (S26). The robot 20 operates on the basis of commands from the computer 10 while connected to the computer 10. The display unit 20f of the robot 20 may display images captured by the camera of the computer 10 during the communication connection by the call with the computer 10.

Upon detecting an instruction at the input unit 10e to disconnect from the robot 20 (S15: Yes), the computer 10 disconnects the connection with the robot 20 (S16). Thereafter, the processing ends. Upon the connection being disconnected by the computer 10 (S27: Yes), the robot 20 ends the processing.

As described above, according to the present embodiment, the on-site user 2 at the location where the robot 20 is installed not only waits for the remote operator 1 to connect the computer 10 to the robot 20, but also can prompt the remote operator 1 to connect to the robot 20 by operating the robot 20 to transmit a callup notification to the computer 10. Accordingly, a communication system can be realized that is easy to use for both the remote operator 1 and the on-site user 2.

### (Modification 1)

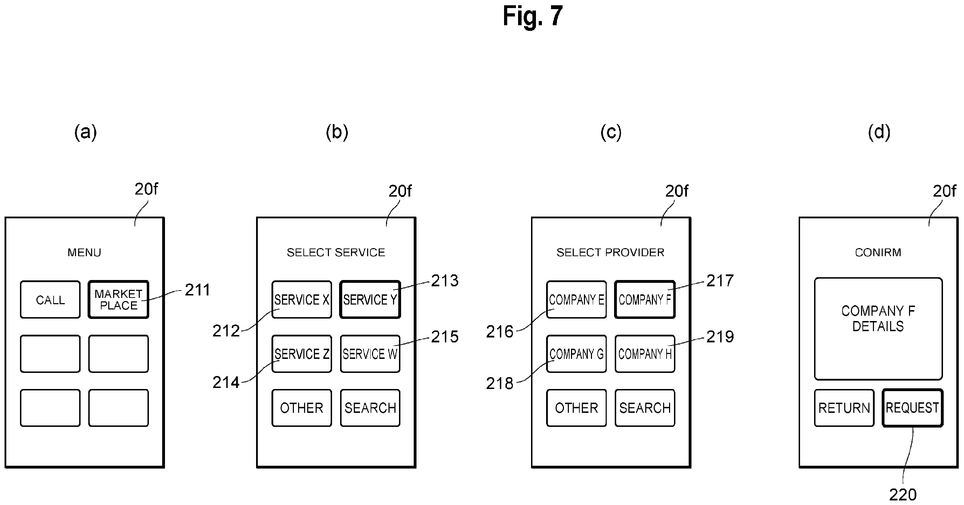

Fig. 7 is diagrams illustrating screen examples displayed on the robot 20 according to a modification of the above embodiment. In the above embodiment, when the robot 20 detects an input operation on the input unit 20e (S21: Yes), operator names registered in advance are displayed on the display unit 20f, but an arrangement may be made in which information relating to computers 10 that can be connected to without necessitating authentication can be searched for on the robot 20 side, through the Internet.

For example, the robot 20 displays a menu screen exemplified in (a) in Fig. 7, in accordance with a tap operation on the input unit 20e. Upon detecting a tap operation on a selection button 211 on which "MARKET PLACE", for example, is displayed in the menu screen, the robot 20 connects to the Internet and performs a search, and displays a service selection screen that is exemplified in (b) in Fig. 7. Icons 212 to 215 indicating services that can be provided through the robot 20 are displayed in the service selection screen. Examples of services that can be provided through the robot 20 include medical consultation services, English conversation lessons, and so forth. Alternatively, this may be services that involve particular work, such as housecleaning or the like.

Upon detecting a tap operation on the icon 213 on which is displayed "Service Y", for example, in the service selection screen, the robot 20 displays a provider selection screen exemplified in (c) in Fig. 7. Icons 216 to 219 indicating businesses that provide the service Y are displayed in the provider selection screen. Upon detecting a tap operation on the icon 217 on which "Company F", for example, is displayed in the provider selection screen, the robot 20 displays a finalization screen exemplified in (d) in Fig. 7. The finalization screen shows detailed information of Company F and services that Company F provides.

Further, upon detecting a tap operation on a request button 220 in the finalization screen, the robot 20 transmits a callup notification directed to the computer 10 of Company F. Upon receiving the callup notification from the robot 20, the computer 10 of Company F executes processing for connecting to the robot 20. Note that in a case in which the computer 10 receiving the callup notification does not have authority to connect to the robot 20, an arrangement may be made in which a predetermined range of authority is automatically imparted to this computer 10.

### (Modification 2)

While a callup notification is transmitted to a computer selected from computers with which communication can be performed, in accordance with an operation on a screen displayed on the display unit 20f of the robot 20 in the above embodiment, an arrangement may be made in which a callup notification is transmitted in accordance with speech input to the robot 20. In this case, the CPU 20a also has functions to serve as a speech recognition unit that recognizes speech input from a microphone for speech input, and performs conversion thereof into text.

For example, upon recognizing particular speech, such as "help me", the robot 20 transmits a callup notification to a computer 10 that is set in advance for emergency use. Examples of a computer for emergency use include a computer used by a family of the on-site user 2, a computer of a primary physician, and so forth.

### (Modification 3)

In the above embodiment, in a case in which the display unit 10f of the computer 10 displays that a callup notification has been received, the computer 10 executes connection processing for communication, for a call with the robot 20, in accordance with input to the input unit 10e. As a modification, following the display unit 10f of the computer 10 displaying that the callup notification has been received, the computer 10 may transmit a response notification to the callup notification to the robot 20, in accordance with input to the input unit 10e. The robot 20 can present the user (in front of the robot 20) with a message in accordance with the response notification received from the computer 10. Examples of messages in accordance with response notifications include audio messages output from a speaker of the robot 20, and text or image messages displayed on the display unit of the robot 20. These messages include "wait a little more", "going to connect now", and so forth. After transmitting a response notification, the computer 10 may execute connection processing for communication, for a call with the robot 20, in accordance with input to the input unit 10e.

**The** embodiment and modifications described above are for facilitating understanding of the present invention, and are not for interpreting the present invention restrictively. The elements included in the present embodiment and modifications, and the layout, materials, conditions, shapes, sizes, and so forth thereof, are not limited to those exemplified, and can be changed as appropriate. Also, configurations shown in different embodiments and modifications may be partially substituted or combined with each other.

### Reference Signs List

- 1: Remote operator
- 2: On-site user
- 10: Computer
- 20: Robot
- 10a, 20a: CPU
- 10b, 20b: RAM
- 10c, 20c: ROM
- 10d, 20d: Communication unit
- 10e, 20e: Input unit
- 10f, 20f: Display unit
- 20g: Driving unit
- 20b: RAM
- 20h: Camera
- 100: Communication system
- 101: Text message
- 102: Connect button
- 103: Cancel button
- 201: Call button
- 202 to 205, 212 to 219: Icon
- 211: Selection button
- 220: Request button

## Claims

1. A communication system, comprising: a robot that is not fixed; and a computer that is capable of communication with the robot, wherein
the robot includes
a camera,
a driving unit that is capable of remote operation by the computer,
a first input unit that is for input of an instruction to the robot, and
a callup unit that, when communication connection is not established with the computer, transmits a callup notification directed to the computer in accordance with the instruction that has been input to the first input unit, and
the computer includes
a second input unit that is for input of an instruction to the robot, and
a display unit that displays an image captured by the camera and also , in a case of receiving the callup notification from the robot, displays that the notification has been received.

2. The communication system according to claim 1, wherein, in a case in which the display unit displays that the callup notification has been received, the computer establishes a communication connection for a call with the robot in accordance with input to the second input unit.

3. The communication system according to claim 1 or 2, wherein
the robot further includes a storage unit for storing information representing at least one computer that is capable of communication with the robot, and
the callup unit transmits the callup notification to a computer corresponding to information selected, out of the information representing at least one computer, in accordance with input to the first input unit.

4. The communication system according to claim 1 or 2, wherein
the robot connects to the Internet in accordance with input to the first input unit, and searches for information relating to computers capable of communication connection with the robot, and
the callup unit transmits the callup notification to a computer corresponding to information selected, out of the information that is searched for, in accordance with input to the first input unit.

5. The communication system according to claim 1 or 2, wherein
the first input unit is a speech input unit that accepts input of speech,
the robot further includes a speech recognition unit that recognizes speech, which has been input to the first input unit, and performs conversion thereof into text, and
in a case in which speech including a particular text is input to the first input unit, the callup unit transmits the callup notification to a computer that is set in advance, out of the at least one computer.

6. The communication system according to any one of claims 1 to 5, wherein
in a case in which the display unit displays that the callup notification is received, the computer transmits a response notification to the robot in accordance with input to the second input unit, and thereafter establishes a communication connection for a call with the robot, and
the robot presents a user with a message in accordance with the response notification received from the computer.

7. A robot of a mobile type or of a mounted type, the robot comprising:
a driving unit that is capable of remote operation by a computer;
an input unit that is for input of an instruction to the robot; and
a callup unit that, when communication connection is not established with the computer, transmits a callup notification directed to the computer in accordance with the input to the input unit.
